# EUROPEAN PATENT APPLICATION

(11) **EP 3 689 836 A1**
(43) Date of publication of application: **05.08.2020**
(21) Application number: 20154372.5
(22) Date of filing: 29.01.2020
(51) Int. Cl.: C04B 28/26, C09D 1/02, C23C 22/00, F24B 1/00, F24C 15/00

(54) **COMPOSITION FOR COATING STAINLESS STEEL AND COOKING APPLIANCE INCLUDING THE SAME**

(30) Priority: 30.01.2019 KR 20190012241
(71) Applicant: LG Electronics Inc., SEOUL 07336 (KR); Industry-University Cooperation Foundation Hanyang University, Seoul 04763 (KR)
(72) Inventor: LEE, Yongsoo, 08592 Seoul (KR); JUN, Hyunwoo, 08592 Seoul (KR); HWANG, Jongwon, 08592 Seoul (KR); KIM, Dong Jin, 08592 Seoul (KR); KIM, Juwon, 08592 Seoul (KR); KANG, Youngjong, 04713 Seoul (KR); YOO, Jiwoong, 06284 Seoul (KR)
(74) Representative: Vossius & Partner Patentanwälte Rechtsanwälte mbB

(57) **Abstract**

A composition for coating stainless steel includes sodium silicate, lithium silicate, sodium tetraborate, and a solvent as the remainder so that a contaminant on the surface of stainless steel is easily removed and yellowing of the stainless steel can be prevented. A cooking appliance includes the stainless steel surface coated with the composition.

## Description

### BACKGROUND

### 1. Technical Field

The present disclosure relates to a composition for coating stainless steel which enables a contaminant on the surface of stainless steel to be easily removed and is capable of preventing yellowing of the stainless steel. The present disclosure also relates to an article, preferably a cooking appliance, including the composition.

### 2. Discussion of Related Art

Stainless steel may be used in cooking appliances such as gas stoves or lightwave ovens. The stainless steel used in cooking appliances may provide a luxurious appearance without any separate surface treatment to retain a shiny and clean feeling.

In some applications, contaminants may be generated during a cooking process and solidified on the surface of stainless steel when exposed to high temperature. Some contaminants solidified on the surface of stainless steel are not easily wiped away, which causes inconvenience in use.

In addition, when stainless steel is exposed to high temperature for a long time, yellowing may occur, turning the surface of stainless steel yellow. A chromium passive film layer may be disposed on the surface of stainless steel to prevent the penetration of air at a room temperature, so that oxygen does not penetrate the surface of stainless steel and yellowing does not occur. However, for example, when exposed to a high temperature of 250 °C or more for a long time, the chromium passive film layer disposed on the surface of stainless steel may change in properties and crack. As a result, oxygen may penetrate through the cracks generated on the surface of stainless steel and form iron oxides, thereby causing yellowing of the stainless steel.

In some instances, a glass component may be applied onto the surface of stainless steel in an attempt to permit for solidified contaminants to be easily removed from the surface of the stainless steel and prevent yellowing of the stainless steel. However, when used in an environment exposed to moisture for a long time, the surface of stainless steel coated with a glass component may be roughened because cations in the glass component can be eluted. In addition, when exposed to moisture in the air, the glass component may cause whitening of the surface of stainless steel.

### SUMMARY

Some implementations of the present disclosure provides a composition for coating stainless steel which enables a contaminant on the surface of stainless steel to be easily removed, and further provides an article, preferably a cooking appliance, including the same.

Some implementations of the present disclosure relates to a composition for coating stainless steel which is capable of preventing yellowing of the stainless steel when stainless steel is exposed to high temperature for a long time, and further provides an article, preferably a cooking appliance, including the same.

Some implementations of the present disclosure provides a composition for coating stainless steel which prevents a change in the surface of stainless steel and further prevents whitening by enhancing the moisture resistance of stainless steel and also enhancing surface hardness, and further provides an article, preferably a cooking appliance, including the same.

The present disclosure is not limited to the above-mentioned implementations, and other implementations and advantages of the present disclosure which are not mentioned can be understood by the following description and more clearly understood by exemplary embodiments of the present disclosure. In addition, it will be readily apparent that the implementations and advantages of the present disclosure may be realized by means indicated in the claims and a combination thereof.

In some implementations, a composition for coating stainless steel, and an article, preferably a cooking appliance, including the same, according to some implementations of the present disclosure may include sodium silicate, lithium silicate, and a solvent as the remainder, such that a contaminant on the surface of stainless steel may be easily removed.

In addition, a composition for coating stainless steel, and an article, preferably a cooking appliance, including the same, according to some implementations of the present disclosure may include sodium silicate, lithium silicate, and a solvent as the remainder, to prevent yellowing of the stainless steel even when the stainless steel is exposed to high temperature for a long time.

Additionally, a composition for coating stainless steel, and an article, preferably a cooking appliance, including the same, according to some implementations of the present disclosure may include sodium tetraborate to enhance the moisture resistance of stainless steel, such that a change in the surface of stainless steel and whitening of the stainless steel may not occur, and such that the surface hardness may also be enhanced.

As used herein, the term "stainless steel" preferably refers to steel containing 11 wt.-% or more of chromium and 1.2 wt.-% or less of carbon, based on the total weight of the steel.

### BRIEF DESCRIPTION OF THE DRAWINGS

FIG. 1 shows photographic images obtained before and after contaminants are removed from a surface of stainless steel coated with an example composition (Example 1) and an uncoated surface of stainless steel (Comparative Example 1), respectively.
FIG. 2 shows photographic images obtained after the surface of stainless steel coated with the composition (Example 1) and the uncoated surface of stainless steel (Comparative Example 1) are exposed to 400 °C for an hour, respectively.
FIG. 3 shows scanning electron microscope (SEM) images obtained after the stainless steel coated with a composition (Example 1) and a stainless steel coated with another composition (Comparative Example 2) were immersed into a boiling water for 12 hours.

### DETAILED DESCRIPTION

Several implementations, features and advantages of the present disclosure will be described in detail with reference to the accompanying drawings, and therefore, the technical idea of the present disclosure will be easily implemented by those of ordinary skill in the art. In the following description of the present disclosure, when detailed description on the related art is determined to unnecessarily obscure the subject matter of the present disclosure, the detailed description will be omitted. Hereinafter, exemplary embodiments of the present disclosure will be described in detail with reference to the accompanying drawings. In the drawings, the same reference numerals are used to indicate the same or similar components.

Hereinafter, a composition for coating stainless steel and an article, preferably a cooking appliance, including the same according to some embodiments of the present disclosure will be described.

### <Composition for coating stainless steel>

In some implementations, a composition for coating stainless steel according to the present disclosure can include sodium silicate, lithium silicate, sodium tetraborate, and a solvent as the remainder.

For example, the composition according to some implementations of the present disclosure includes sodium silicate.

Sodium silicate is a kind of silicate. In some implementations, sodium silicate can have the chemical formula of Na₂SiO₃. Sodium silicate can provide high heat resistance stainless steel. Thus, the physical properties of stainless steel coated with the composition including sodium silicate do not change even at a high temperature of 400 °C or more.

In addition, since sodium silicate is similar in composition to glass, it can provide low air permeability and transparency. Therefore, the surface of stainless steel coated with the composition including sodium silicate does not yellow because the coating of sodium silicate can prevent oxygen from penetrating the surface of stainless steel. In addition, the stainless steel coated with the composition including sodium silicate can retain a shiny and clean feeling and exhibit a luxurious appearance.

In some implementations, the composition according to the present disclosure includes sodium silicate at 20 to 40 wt%. If sodium silicate is included less than 20 wt% in the composition, a coating layer may crack and be pulverized in the process of coating the stainless steel, thereby hindering the coating layer from being formed on the stainless steel. If sodium silicate is included greater than 40 wt% in the composition, the moisture resistance of the coating layer on the stainless steel may be degraded, and the coating layer may be combined with moisture in the air at room temperature, thereby causing whitening (i.e., causing the surface of stainless steel to be whitened).

In addition or alternatively, the composition according to some implementations of the present disclosure can include lithium silicate.

Lithium silicate is a kind of silicate. In some implementations, lithium silicate can have the chemical formula of Li₂SiO₃. In some implementations, lithium silicate can provide better heat resistance than sodium silicate. Therefore, the stainless steel coated with the composition including lithium silicate can further be improved in heat resistance.

In addition, in some implementations, lithium silicate is not easily dissolved by moisture as compared with sodium silicate. Accordingly, whitening can be minimized on the stainless steel coated with the composition including lithium silicate because the coating layer of the surface of stainless steel cannot be combined with moisture in the air at room temperature. In addition, since lithium silicate is similar in composition to glass, it may exhibit low air permeability and transparency. Therefore, the surface of stainless steel coated with the composition including lithium silicate does not yellow because lithium silicate can prevent oxygen from penetrating the surface of stainless steel. In addition, the stainless steel coated with the composition including lithium silicate can retain a shiny and clean feeling and exhibit a luxurious appearance.

In some implementations, the composition according to the present disclosure includes lithium silicate at 10 to 30 wt%. If lithium silicate is included less than 10 wt%, a relative amount of the sodium silicate is increased in the composition. This may result in relative degradation of the moisture resistance of the coating layer on the stainless steel, and permit the coating layer to be combined with moisture in the air at room temperature to cause whitening of the surface of stainless steel. If lithium silicate is included greater than 30 wt%, a relative amount of the sodium silicate is decreased in the composition. This may cause the coating layer to crack and be pulverized in the process of coating stainless steel, thereby hindering the coating layer from being formed on the stainless steel.

In addition or alternatively, the composition according to some implementations of the present disclosure can include sodium tetraborate.

Sodium tetraborate is a kind of a boron compound. In some implementations, sodium tetraborate can have the chemical formula of Na₂B₄O₇. Sodium tetraborate can provide high moisture resistance. Thus, even when a coating layer including sodium tetraborate on stainless steel is exposed to a wet environment for a long time, the physical properties of the coating layer do not change. In addition, the coating layer including sodium tetraborate on the stainless steel has a solid and compact structure. Moreover, the coating layer including sodium tetraborate on the stainless steel can provide enhanced moisture resistance, thereby preventing that a change in the surface of stainless steel and whitening of the stainless steel, and further enhancing surface hardness. Accordingly, the stainless steel coated with the composition including sodium tetraborate can provide enhanced durability.

In some implementations, the composition according to the present disclosure includes sodium tetraborate at 2 wt% or less (greater than 0 wt%). If sodium tetraborate is not included in the composition, sodium ions and lithium ions may be eluted from the coating layer on the stainless steel, thereby roughening the surface of the stainless steel. If sodium tetraborate is included at greater than 2 wt% in the composition, the stability of the composition may be degraded, thereby gelating the composition when stored for a long time. Accordingly, the coating layer may not be easily formed on the surface of the stainless steel, and mass productivity may be degraded.

In addition or alternatively, the composition according to some implementations of the present disclosure includes a solvent.

In some implementations, the solvent can be used to appropriately mix sodium silicate, lithium silicate, and sodium tetraborate to meet the required physical properties of the composition for coating stainless steel.

In some implementations, distilled water, an organic solvent, or the like may be used for the solvent without limitation. In preferred implementations, distilled water can be used for the solvent. Distilled water for the solvent can facilitate workability in the process of coating a stainless steel with the composition. In addition, when stainless steel is coated with the composition including distilled water, the thickness of the coating layer on the stainless steel can be easily adjusted during the formation of the coating layer on the stainless steel.

The composition according to some implementations of the present disclosure can include the solvent as the remainder other than sodium silicate, lithium silicate, and sodium tetraborate. Preferably, the composition according to some implementations of the present disclosure can include the solvent at 30 to 70 wt%. Inclusion of the solvent within the above-described range can facilitate workability in the coating process, and the thickness of the coating layer on the stainless steel can be easily adjusted during the formation of the coating layer on the stainless steel.

### <Cooking appliance including composition for coating stainless steel>

Next, the composition according to some implementations of the present disclosure can be cured on the surface of a target material to be coated to form a coating layer. For example, the composition can be cured on a stainless steel surface of the upper plate of a gas stove to form a coating layer thereon. In another example, the composition can be cured on a stainless steel surface inside a lightwave oven to form a coating layer thereon.

In some implementations, the composition can be applied onto the surface of the stainless steel by a dry or wet process. As one example, the composition can be applied onto the surface of the stainless steel by a spraying method. In some implementations, the composition applied onto the surface of the stainless steel can be cured at 400 to 700 °C for 300 to 450 seconds to coat the surface of the stainless steel.

The present invention may be summarized by the following items 1 to 12.
1. A composition for coating stainless steel, comprising:
   sodium silicate;
   lithium silicate;
   sodium tetraborate; and
   a solvent as the remainder.
2. The composition for coating stainless steel of item 1, wherein the composition includes the sodium silicate at 20 to 40 wt%.
3. The composition for coating stainless steel of item 1, wherein the composition includes the lithium silicate at 10 to 30 wt%.
4. The composition for coating stainless steel of item 1, wherein the composition includes the sodium tetraborate at 2 wt% or less and greater than 0 wt%.
5. The composition for coating stainless steel of item 1, wherein the solvent as the remainder includes distilled water.
6. The composition for coating stainless steel of item 1, wherein the composition includes:
   the sodium silicate at 20 to 40 wt%;
   the lithium silicate at 10 to 30 wt%;
   the sodium tetraborate at 2 wt% or less and greater than 0 wt%; and
   the solvent as the remainder.
7. A cooking appliance comprising:
   a surface of stainless steel that forms an external appearance; and
   a coating layer disposed on the surface of stainless steel, the coating layer including a cured product having a composition comprising:
      sodium silicate;
      lithium silicate;
      sodium tetraborate; and
      a solvent as the remainder.
8. The cooking appliance of item 7, wherein the composition includes the sodium silicate at 20 to 40 wt%.
9. The cooking appliance of item 7, wherein the composition includes the lithium silicate at 10 to 30 wt%.
10. The cooking appliance of item 7, wherein the composition includes the sodium tetraborate at 2 wt% or less and greater than 0 wt%.
11. The cooking appliance of item 7, wherein the solvent as the remainder includes distilled water.
12. The cooking appliance of item 7, wherein the composition includes:
   the sodium silicate at 20 to 40 wt%;
   the lithium silicate at 10 to 30 wt%;
   the sodium tetraborate at 2 wt% or less and greater than 0 wt%; and
   the solvent as the remainder.

Hereinafter, specific examples of the present disclosure will be described below.

### <Examples>

### <Formation of coating layer on stainless steel>

Compositions for coating stainless steel were prepared in the compositions shown in Table 1 below. Each composition was sprayed on a surface of stainless steel using a corona discharge gun. The composition sprayed on the surface of the stainless steel was cured at about 450 to 500 °C for 350 to 400 seconds to finally form a coating layer on the surface of the stainless steel.

**[Table 1]**

| Components (wt%) | Examples | | | Comparative Examples | |
|---|---|---|---|---|---|
| | 1 | 2 | 3 | 1 | 2 |
| Sodium silicate | 31.05 | 33.13 | 29.05 | - | 55.13 |
| Lithium silicate | 21.85 | 20.21 | 22.12 | - | 31.33 |
| Sodium tetraborate | 1.05 | 1.85 | 1.51 | - | - |
| Distilled water | Bal. | Bal. | Bal. | - | Bal. |

### <Experimental Example>

The stainless steels on which coating layers were formed of the compositions of Examples 1 to 3 and Comparative Example 2, respectively, and the stainless steel without a coating layer according to Comparative Example 1, were evaluated as described below, and results thereof are shown in Table 4.

### 1. Evaluation of cleanability

The cleanability of stainless steel was measured. The method for measuring cleanability is as follows. 1 gram of chicken oil as a contaminant was uniformly and thinly spread on the stainless steel of each of Examples 1 to 3 and Comparative Examples 1 and 2 with a brush, and then the stainless steel to which the contaminant had been attached was placed in a thermostat at 260 °C for an hour to solidify the contaminant.

The solidified contaminant was cooled naturally and was subject to back and forth (one round trip) wiping using a wet cloth with a force of about 3 kgf. In this case, the number of round trips of wiping was measured and defined as the number of round trips for cleaning the contaminant, and evaluation standards for cleanability are shown in Table 2 below.

**[Table 2]**

| Number of round trips for cleaning | Cleanability |
|---|---|
| 1 ∼ 5 | Very good |
| 6 ∼ 15 | Good |
| 16 ∼ 25 | Fair |
| 26 ∼ | Poor |

### 2. Evaluation of yellowing occurrence

Whether the stainless steel yellows or not was determined. The method of evaluating the yellowing is as follows. The stainless steel of each of Examples 1 to 3 and Comparative Examples 1 and 2 was placed in a QUV tester and exposed to a radiance of 0.72 W/m² and about 400 °C for an hour using a UV lamp with an average wavelength of 313 nm, and then the color difference (ΔE) between the initial stainless steel and the stainless steel after exposure to about 400 °C for an hour was measured using a color difference meter.

Yellowing evaluation standards for stainless steel are as follows.
- The color difference (ΔE) of stainless steel is 2 or less: Suitable
- The color difference (ΔE) of stainless steel is greater than 2: Unsuitable 3. Evaluation of durability

The surface hardness of stainless steel was measured to evaluate durability. The surface hardness was measured by measuring pencil hardness using a pencil hardness tester (e.g., manufactured by Chungbuk Tech) under a 500 g load. In accordance with ASTM 3363-74, a change in the surface of the stainless steel was observed by applying a scratch on the surface with a standard pencil (Mitsubishi) maintained at an angle of 45° while varying the pencil from 6B to 9H. The pencil hardness was measured five times, and an average value thereof was entered as a result.

Durability evaluation standards for stainless steel are shown in Table 3 below.

**[Table 3]**

| Pencil hardness | Durability |
|---|---|
| 8H or more | Very good |
| 7H or more and less than 8H | Good |
| 6H or more and less than 7H | Fair |
| less than 6H | Poor |

### 4. Evaluation of moisture resistance

A change in the surface of a coating film on the stainless steel was observed to evaluate moisture resistance. The method for measuring a change in the surface of the coating film on the stainless steel is as follows. The stainless steel was left to stand in boiling water (100 °C) for 12 hours, and then the roughness of the surface of the stainless steel was observed using a scanning electron microscope (SEM).

Moisture resistance evaluation standards for stainless steel are as follows.
- There was almost no change in the surface of the stainless steel: Suitable
- A small amount of fine curvature was present in the surface of the stainless steel: Satisfactory
- A large amount of fine curvature was present in the surface of the stainless steel: Unsuitable

**[Table 4]**

| | Examples | | | Comparative Examples | |
|---|---|---|---|---|---|
| | 1 | 2 | 3 | 1 | 2 |
| Cleanability evaluation | Very good | Very good | Very good | Poor | Very good |
| Yellowing evaluation | Suitable | Suitable | Suitable | Unsuitable | Suitable |
| Durability evaluation | Very good | Very good | Very good | Poor | Good |
| Moisture resistance evaluation | Suitable | Suitable | Suitable | - | Unsuitable |

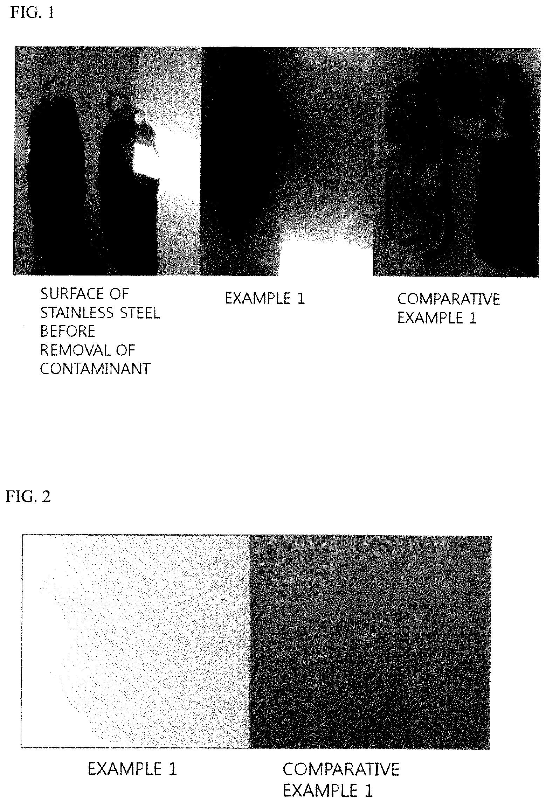

As shown in Table 4, it can be seen that the stainless steels coated with the compositions of Examples 1 to 3 exhibited a very good contaminant cleaning ability, compared to the uncoated stainless steel of Comparative Example 1. FIG. 1 shows photographic images of the surfaces of stainless steel before and after contaminants are removed therefrom. As shown in FIG. 1, the contaminant was easily removed from the surface of the stainless steel coated with the composition of Example 1, by only 5 or less round trips for cleaning. On the other hand, the contaminant was solidified on the uncoated surface of the stainless steel of Comparative Example 1 and was not removed therefrom even by 26 or more round trips for cleaning.

In addition, as shown in Table 4, the stainless steels coated with the compositions of Examples 1 to 3 hardly yellowed even under a condition of high temperature. FIG. 2 shows photographic images of the surface of stainless steel coated with the composition of Example 1 and the uncoated surface of stainless steel of Comparative Example 1 after exposure to 400 °C for an hour. As shown in FIG. 2, the surface of stainless steel coated with the composition of Example 1 hardly yellowed, compared with the uncoated surface of stainless steel of Comparative Example 1. In addition, as shown in Table 4, the stainless steels coated with the compositions of Examples 1 to 3 exhibited very good durability, compared to the uncoated surface of stainless steel of Comparative Example 1.

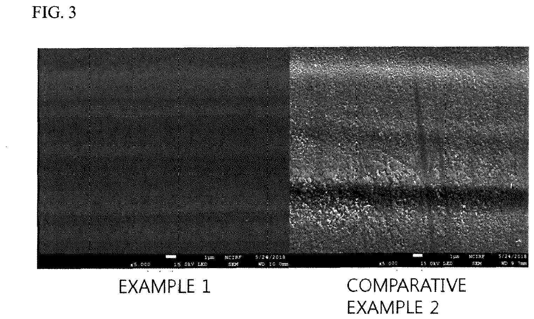

Additionally, as shown in Table 4, the coating layer of stainless steels coated with the compositions of Examples 1 to 3 provided almost no surface change, compared to the coating layer of stainless steel coated with the composition of Comparative Example 2, thereby showing very good moisture resistance. FIG. 3 shows SEM images of the surface of stainless steel coated with the composition of Example 1 and the surface of stainless steel coated with the composition of Comparative Example 2 after being left to stand in boiling water for 12 hours. As shown in FIG. 3, the coating layer of stainless steel coated with the composition of Example 1 provided almost no surface change, compared to the coating layer of stainless steel coated with the composition of Comparative Example 2.

Since the composition for coating stainless steel and the cooking appliance including the same according to some implementations of the present disclosure include sodium silicate, lithium silicate, and a solvent, a contaminant on the surface of stainless steel can be easily removed (the surface of stainless steel can be easily cleaned) without excessive time consumption.

In addition, since the composition for coating stainless steel and the cooking appliance including the same according to some implementations of the present disclosure include sodium silicate, lithium silicate, and a solvent, yellowing does not occur on the surface of stainless steel, and therefore, a shiny and clean feeling can be retained, and a luxurious appearance can be exhibited.

In addition, since the composition for coating stainless steel and the cooking appliance including the same according to some implementations of the present disclosure include sodium tetraborate to enhance the moisture resistance of stainless steel, the durability of a stainless steel coating film can be increased.

Although the present disclosure has been described above with reference to the illustrated drawings, it is obvious that the present disclosure is not limited to the implementations and drawings disclosed herein, and various modifications may be made by those skilled in the art within the scope of the present disclosure. In addition, although some advantages of the configuration of the present disclosure are not explicitly described with respect to the above-described implementations of the present disclosure, it is obvious that other advantages predictable by the corresponding configuration are also recognized.

## Claims

1. A composition, comprising:
sodium silicate;
lithium silicate;
sodium tetraborate; and
a solvent.

2. The composition of claim 1, wherein the composition includes the sodium silicate at 20 to 40 wt%, based on the weight of the composition,

3. The composition of claim 1 or 2, wherein the composition includes the lithium silicate at 10 to 30 wt%, based on the weight of the composition.

4. The composition of any one of claims 1 to 3, wherein the composition includes the sodium tetraborate at 2 wt% or less and greater than 0 wt%, based on the weight of the composition.

5. The composition of any one of claims 1 to 4, wherein the solvent includes distilled water.

6. The composition of any one of claims 1 to 5, wherein the composition includes:
the sodium silicate at 20 to 40 wt%;
the lithium silicate at 10 to 30 wt%;
the sodium tetraborate at 2 wt% or less and greater than 0 wt%; and
the solvent.

7. The composition of any one of claims 1 to 6, wherein the solvent forms the remainder.

8. The composition of any one of claims 1 to 7, wherein the composition is for coating stainless steel.

9. Use of the composition according to any of claims 1 to 8 for coating stainless steel.

10. An article which is obtainable by coating stainless steel with the composition of any one of claims 1 to 8, and optionally curing the composition.

11. The article of claim 10, wherein the article is a cooking appliance comprising:
a surface of stainless steel that preferably forms an external appearance; and
a coating layer disposed on the surface of stainless steel, the coating layer including a cured product of the composition of any one of claims 1 to 8.
